# EUROPÄISCHE PATENTSCHRIFT

(11) **EP 3 649 446 B1**
(45) Veröffentlichungstag und Bekanntmachung des Hinweises auf die Patenterteilung: **20.04.2022**
(21) Anmeldenummer: 18732751.5
(22) Anmeldetag: 19.06.2018
(51) Int. Cl.: G01F 25/00, G01N 9/00, G01N 11/16, G01F 23/296, G01F 1/84

(54) **ZUSTANDSÜBERWACHUNG EINER SPULE IN EINEM SENSOR**
MONITORING THE STATE OF A COIL IN A SENSOR
SURVEILLANCE DE L'ÉTAT D'UNE BOBINE DANS UN CAPTEUR

(30) Priorität: 06.07.2017 DE 102017115147
(43) Veröffentlichungstag der Anmeldung: 13.05.2020
(73) Patentinhaber: Endress+Hauser SE+Co. KG, 79689 Maulburg (DE)
(72) Erfinder: KUHNEN, Raphael, 79418 Schliengen (DE); WACKER, Ralf, 79585 Steinen (DE); SANDOR, Izabella, 79650 Schopfheim (DE)
(74) Vertreter: Andres, Angelika Maria
(86) Internationale Anmeldenummer: PCT/EP2018/066254
(87) Internationale Veröffentlichungsnummer: WO 2019/007670

(56) Entgegenhaltungen:
- WO-A1-2013/097991
- DE-A1-102005 032 134
- DE-A1-102015 104 533
- DE-A1-102015 112 421
- DE-A1-102015 122 284
- GB-A- 2 348 012
- D S Kayser ET AL: "3.21 Vibrating Level Switches" In: "Instrument Engineers' Handbook - 4th Edition - Volume 1: Process Measurement and Analysis", 27. Juni 2003 (2003-06-27), CRC Press, XP055503012, Chapter 3.21; Seite 556 - Seite 558 Abbildung 3.21a

## Beschreibung

Die Erfindung betrifft ein Verfahren zur Zustandsüberwachung einer Spule mit zumindest zwei Anschlussdrähten, welche Spule Teil einer Vorrichtung zur Bestimmung und/oder Überwachung zumindest einer Prozessgröße eines Mediums in einem Behälter ist, sowie eine Vorrichtung, welche ein erfindungsgemäßes Verfahren ausführt. Bei der Vorrichtung handelt es sich um ein Feldgerät der Prozess- und/oder Automatisierungstechnik. Beispielsweise kann es sich um einen vibronischen Sensor handeln, welcher eine mechanisch schwingfähige Einheit, eine Antriebs-/Empfangseinheit mit zumindest einer Spule und eine Elektronikeinheit umfasst. Die Prozessgröße ist dann beispielsweise gegeben durch den Füllstand oder den Durchfluss des Mediums oder auch durch dessen Dichte oder Viskosität. Das Medium befindet sich in einem Behälter, wobei unter dem Begriff Behälter im Rahmen der vorliegenden Erfindung auch ein Tank, ein Container oder eine Rohrleitung verstanden werden kann. Das Medium selbst wiederum ist beispielsweise gegeben durch eine Flüssigkeit, ein Gas, oder ein Schüttgut.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran, auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, oder DE102005015547A1 beschrieben. Die Einstellung einer vorgebbaren Phasenverschiebung ist außerdem mittels eines sogenannten Frequenzsuchlaufs, wie beispielsweise in der der DE102009026685A1, DE102009028022A1, und DE102010030982A1 offenbart, oder auch auf Basis einer Phasenregelschleife (engl. Phase-Locked-Loop, PLL) möglich. Ein auf einer PPL basierendes Anregungsverfahren ist beispielsweise Gegenstand der DE00102010030982A1.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen, wie beispielsweise ein vorgegebener Füllstand eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist. Verschiedene Verfahren zur Bestimmung der Viskosität und/oder der Dichte eines Mediums sind beispielsweise in den Dokumenten DE10050299A1, DE102007043811A1, DE10057974A1, oder auch DE102015102834A1 bekannt geworden.

Für die Antriebs-/Empfangseinheit selbst werden insbesondere piezoelektrische und/oder elektromagnetische Antriebs-/Empfangseinheiten verwendet. Bei auf dem piezoelektrischen Effekt basierenden Antriebs-/Empfangseinheiten kann in der Regel ein vergleichsweise hoher Wirkungsgrad erzielt werden. Dabei sei unter dem Begriff Wirkungsgrad die Effizienz der Umwandlung der elektrischen in mechanische Energie verstanden. Als Materialien kommen hier häufig piezokeramische Werkstoffe auf PZT-Basis (Bleizirkonattitanat) zum Einsatz. Diese eignen sich normalerweise allerdings nur für einen begrenzten Temperaturbereich von bis zu ca. 300°C.

Zwar gibt es piezokeramische Werkstoffe, die auch bei Temperaturen oberhalb von 300°C ihre piezoelektrischen Eigenschaften bewahren; diese haben jedoch den Nachteil, dass sie deutlich ineffektiver sind als die Werkstoffe auf PZT-Basis. Für den Einsatz in vibronischen Sensoren sind diese Hochtemperaturwerkstoffe darüber hinaus aufgrund der großen Unterschiede in den thermischen Ausdehnungskoeffizienten von Metallen und keramischen Stoffen nur bedingt geeignet. Wegen ihrer Funktion als Kraftgeber zur Anregung der mechanischen Schwingungen der schwingfähigen Einheit muss das jeweilige piezoelektrische Element kraftschlüssig mit der schwingfähigen Einheit verbunden sein. Insbesondere bei hohen Temperaturen kommt es aber vermehrt zu großen mechanischen Spannungen, die einen Bruch des piezoelektrischen Elements und damit einhergehend einen Totalausfall des Sensors zur Folge haben können.

Eine Alternative, welche für den Einsatz bei hohen Temperaturen besser geeignet sein kann, stellen sogenannte elektromagnetische Antriebs-/Empfangseinheiten dar, wie beispielsweise in den Druckschriften WO 2007/113011, WO 2007/114950 A1, DE102015104533A1 oder auch in der bisher unveröffentlichten deutschen Patentanmeldung mit dem Aktenzeichen 102016112308.0 beschrieben. Die Umwandlung elektrischer Energie in mechanische Energie erfolgt hierbei über ein Magnetfeld. Eine entsprechende elektromechanische Wandlereinheit umfasst zumindest eine Spule und einen Permanentmagneten. Mittels der Spule wird ein den Magnet durchsetzendes magnetisches Wechselfeld erzeugt, und über den Magneten eine periodische Kraft auf die schwingfähige Einheit übertragen. Eine derartige Antriebs-/Empfangseinheit ist je nach verwendeten Materialien beispielsweise für einen Temperaturbereich zwischen -200°C und 500°C einsetzbar.

Um das zuverlässige Arbeiten eines vibronischen Sensors zu gewährleisten, sind aus dem Stand der Technik verschiedenste Verfahren zur Diagnose möglicher Fehlfunktionen eines vibronischen Sensors bekannt geworden. Die Möglichkeit einer Zustandsüberwachung oder Diagnose ist insbesondere im Falle von sicherheitskritischen Anwendungen, wie beispielsweise einem Einsatz eines Grenzstandschalters in einem mit einer brennbaren Flüssigkeit gefüllten Behälter, von großer Bedeutung. Je nach konkreter Anwendung muss das jeweilige Messgerät unterschiedlichen Sicherheitsanforderungen genügen. In dieser Hinsicht ist beispielsweise der sogenannte SIL-Standard (SIL steht für Safety Integrity Level) gemäß der Normvorschrift IEC61508 bekannt geworden, welcher zwischen vier unterschiedlichen Stufen zur Spezifizierung der Anforderung für die Sicherheitsintegrität von Sicherheitsfunktionen unterscheidet. Die Sicherheitsanforderungsstufe stellt dabei im Prinzip ein Maß für die Zuverlässigkeit des jeweiligen Systems bzw. Messgeräts in Abhängigkeit von einer potentiellen Gefährdung dar. Typischerweise bereitgestellte Sicherheitsfunktionen zur Gewährleistung eines bestimmten Levels für die Sicherheitsintegrität sind beispielsweise gegeben durch Notausschaltungen, oder das Abschalten überhitzter Geräte.

Zur Festlegung eines Sicherheitsintegritätslevels wird beispielsweise das Ausfallverhalten einzelner Baugruppen untersucht. Weiterhin wird das Vorliegen redundanter Strukturen geprüft, sowie das Verhältnis zwischen sicheren und unsicheren, bzw. gefährlichen, Fehlern zu unterscheiden. Aus derartigen Überlegungen kann eine Gesamt-Ausfallrate bestimmt werden, anhand welcher dem jeweiligen System bzw. Messgerät ein bestimmtes Sicherheitsintegritätslevel zugeordnet werden kann.

Die DE102004027397A1 beschreibt eine Möglichkeit zur Detektion eines Kabelbruchs in einem vibronischen Sensor. Aus den Dokumenten DE10014724A1 und DE102009045204A1 sind Diagnosemöglichkeiten zur Erkennung von Ansatz im Bereich der schwingfähigen Einheit bekannt geworden. Aber auch Diagnosen im Bereich der Antriebs-/Empfangseinheit sind möglich, wie beispielsweise die in der DE102008032887A1 beschriebene Diagnose einer piezoelektrischen Antriebs-/Empfangseinheit.

Die GB 2 348 012 A beschreibt ein weiteres Verfahren zur Zustandsüberwachung einer Spule als Teil einer Vorrichtung zur Bestimmung des Durchflusses eines Mediums in einer Rohrleitung.

Ausgehend vom Stand der Technik liegt der vorliegenden Erfindung die Aufgabe zugrunde, ein Messgerät bereitzustellen, welches hohen Sicherheitsanforderungen genügt.

Diese Aufgabe wird gelöst durch das Verfahren gemäß Anspruch 1 sowie durch die Vorrichtung gemäß Anspruch 12.

Bezüglich des Verfahrens wird die der Erfindung zugrundeliegende Aufgabe gelöst durch ein Verfahren zur Zustandsüberwachung einer Spule mit zumindest zwei Anschlussdrähten, welche Spule Teil einer Vorrichtung zur Bestimmung zumindest einer Prozessgröße eines Mediums in einem Behälter ist, welches Verfahren die folgenden Verfahrensschritte umfasst:
- Ermitteln eines Soll-Wertes eines ohmschen Gesamtwiderstands für die Spule und die Anschlussdrähte,
- Beaufschlagen der Spule mit einem elektrischen Anregesignal und Empfangen eines elektrischen Empfangssignals von der Spule mittels der beiden Anschlussdrähte,
- Ermitteln eines Ist-Wertes des ohmschen Gesamtwiderstands zumindest anhand des Empfangssignals, und
- Vergleichen des Ist-Wertes mit dem Soll-Wert und Ermitteln eines Zustandsindikators anhand des Vergleichs.

Eine Spule umfasst in der Regel einen gewickelten Spulendraht mit zumindest einer Windung und wird mittels zwei Anschlussdrähten elektrisch kontaktiert. Die Spule kann dabei optional auf einen Spulenkörper gewickelt sein. Auch kann die Spule einen Spulenkern umfassen. Erfindungsgemäße wird anhand eines Vergleichs eines Ist-Werts und eines Soll-Werts für den ohmschen Gesamtwiderstand einer Spule eines Messgeräts auf einen Defekt oder auf eine Fehlfunktion der Spule oder von zumindest einem der Anschlussdrähte geschlossen. Der Gesamtwiderstand umfasst dabei sowohl Beiträge der Anschlussdrähte als auch den Beitrag des Spulendrahtes selbst.

Die Spule ist beispielsweise Teil einer elektromagnetischen Empfangseinheit eines vibronischen Sensors. In diesem Falle erlaubt das erfindungsgemäße Verfahren also eine Diagnose bezüglich der Antriebs-/Empfangseinheit des Messgeräts. Die Erfindung ist aber keineswegs auf vibronische Sensoren beschränkt. Vielmehr kann das erfindungsgemäße Verfahren zur Zustandsüberwachung analog auch auf andere zumindest eine Spule umfassende Messgeräte, beispielsweise magnetischinduktive Durchflussmessgeräte, angewendet werden. Bevorzugt wird das erfindungsgemäße Verfahren für solche Spulen eingesetzt, welche zumindest teilweise einer Sensoreinheit des jeweiligen Messgeräts zuzuordnen sind.

Bei dem Zustandsindikator kann es sich um eine Aussage über eine mangelhafte elektrische Kontaktierung bis hin zu einem Kabelbruch handeln. Im Falle einer mangelhaften Kontaktierung kann beispielsweise ein zusätzlicher Übergangswiderstand im Bereich der mangelhaften Kontaktierung auftreten, welcher entsprechend auch einen Beitrag zum ohmschen Gesamtwiderstand der Spule liefert. Alternativ oder auch zusätzlich kann es sich bei dem Zustandsindikator aber auch um eine Aussage über einen Windungsschluss im Bereich des Spulendrahtes handeln. Auch ein Windungsschluss führt zu einer Änderung des Gesamtwiderstands der Spule.

In einer vorteilhaften Ausgestaltung des Verfahrens wird eine Abweichung zwischen dem Ist-Wert und dem Soll-Wert bestimmt, wobei der Zustandsindikator anhand der Abweichung ermittelt wird. Insbesondere kann überprüft werden, ob die Abweichung einen vorgebbaren Grenzwert überschreitet und im Falle, dass die Abweichung den vorgebbaren Grenzwert überschreitet, eine Aussage über den Zustand der Spule gemacht werden.

Eine weitere bevorzugte Ausgestaltung beinhaltet, dass eine elektrische Ersatzschaltung für den ohmschen Gesamtwiderstand der Spule erstellt wird, wobei der Soll-Wert für den Gesamtwiderstand anhand der Ersatzschaltung ermittelt wird. Der Gesamtwiderstand setzt sich dabei aus Beiträgen des Spulendrahtes und Beiträgen der Anschlussdrähte zusammen. Der Soll-Wert wird also anhand der Ersatzschaltung berechnet und dann mit einem zumindest anhand des Empfangssignals ermittelten Ist-Wert verglichen. Der Soll-Wert wird dann bevorzugt in einem Speicher hinterlegt, welcher sich gleichermaßen in einer Elektronikeinheit des Messgeräts befinden kann also auch in einer externen Speichereinheit, auf welche zumindest auf Bedarf zugegriffen werden kann.

Andere Möglichkeiten zur Bestimmung eines Soll-Werts für den Gesamtwiderstand sind jedoch gleichermaßen denkbar und fallen ebenfalls unter die vorliegende Erfindung. Beispielsweise kann, beispielsweise im Rahmen der Herstellung des jeweiligen Messgeräts oder bei dessen Auslieferung, ein Messwert für den ohmschen Gesamtwiderstand gemessen und in einem Speicher hinterlegt werden.

Es ist bezüglich des Ersatzschaltbildes von Vorteil, wenn jeder der zumindest zwei Anschlussdrähte durch eine Reihenschaltung eines Draht-Widerstands und eines Draht-Fehler-Widerstands ersetzt wird und/oder wenn die Spule durch eine Reihenschaltung eines Spulen-Widerstands und eines Spulen-Fehlerwiderstands ersetzt wird. Im Idealfall sind die Draht-Fehlerwiderstände sowie der Spulen-Fehlerwiderstand vernachlässigbar und die jeweiligen Soll-Werte ermitteln sich im Wesentlichen aus den Werten für die Draht-Widerstände und den Spulen-Widerstand. Unter Realbedingungen sind jedoch stets Abweichungen der verschiedenen Ist-Werte für die jeweiligen Widerstände von den jeweiligen Soll-Werten zu erwarten. Dann können anhand der Draht-Fehlerwiderstände und anhand des Spulen-Fehlerwiderstandes bestimmte Toleranzbereiche, also zulässige bzw. tolerierbare Abweichungen von den jeweiligen Soll-Werten, definiert werden. Es ist somit von Vorteil, wenn für zumindest einen Draht-Fehler-Widerstand und/oder den Spulen-Fehler-Widerstand ein vorgebbarer Fehler-Wert angenommen wird.

Die Draht-Fehlerwiderstände und der Spulen-Fehlerwiderstand können unter anderem zur Definition des vorgebbaren Grenzwertes für die Abweichung zwischen dem Ist-Wert und dem Soll-Wert für den ohmschen Gesamtwiderstand herangezogen werden. Der vorgebbare Grenzwert kann also aus den Fehler-Widerständen berechnet bzw. ermittelt werden. Im Falle der Vorgabe von Fehler-Widerständen ist dies allerdings nicht zwingend notwendig für die erfindungsgemäße Zustandsüberwachung.

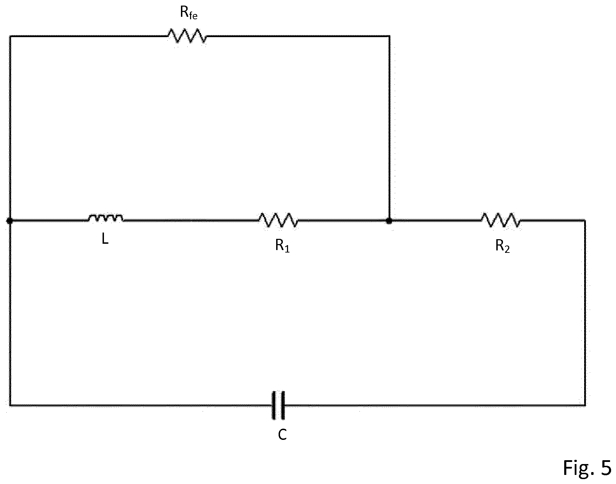

In einer bevorzugten Ausgestaltung des Verfahrens handelt es sich bei dem Zustandsindikator um eine Aussage über das Vorliegen zumindest eines Windungsschlusses im Bereich der Spule oder um eine Aussage über eine mangelhafte elektrische Kontaktierung oder um einen Kabelbruch im Bereich der Spule oder der zumindest zwei Anschlussdrähte. Im Falle einer mangelhaften elektrischen Kontaktierung tritt insbesondere ein durch die mangelhafte Kontaktierung bedingter Übergangswiderstand im Kontaktbereich zwischen dem jeweiligen Anschlussdraht und dem Spulendraht. auf Erfindungsgemäß handelt es sich bei dem Anregesignal um ein Wechselsignal, wobei für zumindest ein erstes Anregesignal mit einer ersten vorgebbaren Frequenz eine erste Phase zwischen dem Anregesignal und dem Empfangssignal ermittelt wird, und wobei eine Abweichung zwischen der ersten Phase und einem Soll-Wert für die erste Phase ermittelt wird. Aus der Phasenverschiebung zwischen dem Anregesignal und dem Empfangssignal bei einer vorgebbaren Frequenz können zusätzliche Informationen über den Zustand der Spule abgeleitet werden. In einem elektrischen Ersatzschaltbild kann die Spule als Schwingkreis dargestellt werden, wie im Zusammenhang mit Fig. 5 noch erläutert werden wird.

Bei der vorgebbaren Frequenz handelt es sich in diesem Zusammenhang bevorzugt nicht um eine Resonanzfrequenz des Schwingungssystems. Im Falle eines Defekts im Bereich der Spule kommt es zu einer Verschiebung der Resonanzfrequenz und damit einhergehend zu einer Verschiebung der vollständigen Spektren der Amplitude des Empfangssignals sowie der Phasenverschiebung zwischen dem Anregesignal und dem Empfangssignal jeweils als Funktion der Frequenz. Entsprechend weicht der Ist-Wert der Phase im Fehlerfall deutlich, insbesondere über einen vorgebbaren Grenzwert hinaus, vom Soll-Wert der Phase ab.

Bezüglich der Anregung der Spule mit einem Wechselsignal ist es erfindungsgemäß vorgesehen, wenn im Falle, dass die Abweichung einen ersten vorgebbaren Grenzwert überschreitet, auf das Vorliegen zumindest eines Windungsschlusses im Bereich der Spule geschlossen wird. Im Falle eines Windungsschlusses im Bereich der Spule kommt es zu einer Verringerung der Induktivität der Spule und damit einhergehend zu einer positiven Verschiebung der Resonanzfrequenz bzw. der vollständigen Spektren der Amplitude und Phase als Funktion der Frequenz.

Im Falle eines Kabelbruchs im Bereich der Anschlussdrähte oder im Bereich des Spulendrahts oder auch im Falle des Aufbrechens einer elektrischen Kontaktierung zwischen einem Anschlussdraht und dem Spulendraht kommt es dagegen zu einem vollständigen Unterbruch des jeweiligen Schwingkreises.

Es ist ebenso von Vorteil, wenn im Falle, dass die Abweichung einen zweiten vorgebbaren Grenzwert überschreitet, auf das Vorhandensein von Feuchtigkeit oder Medium zumindest in einem Bereich, in welchem sich die Spule befindet, geschlossen wird. Das Eindringen von Feuchtigkeit oder Medium bedingt eine Änderung einer Kapazität in einem Ersatzschaltbild. Häufig kommt es zu einer Vergrößerung der Kapazität. Als Folge tritt ebenfalls eine negative Verschiebung der Resonanzfrequenz auf. Gegebenenfalls kann sich auch die Güte des Schwingungssystems verändern.

In einer weiteren Ausgestaltung wird für zumindest ein zweites Anregesignal mit einer zweiten vorgebbaren Frequenz eine zweite Phase zwischen dem Anregesignal und dem Empfangssignal ermittelt, wobei eine Abweichung zwischen der zweite Phase und einem Soll-Wert für die zweite Phase ermittelt wird. Insbesondere werden Abweichung zwischen den jeweiligen Ist-Werten und Soll-Werten für die erste und zweite Phase entsprechend einer Anregung mit der ersten und zweiten Frequenz ermittelt. Indem die Phasen für zwei verschiedene Frequenzen, welche bevorzugt beide nicht einer Resonanzfrequenz des Schwingungssystems entsprechen, ermittelt werden, kann neben einer einfachen lateralen Verschiebung der Resonanzfrequenz bzw. Phase vorteilhaft auch eine Aussage über eine Änderung der Güte des Schwingungssystems getroffen werden. Anhand dieser zusätzlichen Information kann die Zustandsüberwachung der Spule weiter präzisiert werden.

Alternativ ist es auch möglich einen Abstand zwischen der ersten und zweiten Phase mit einem Soll-Wert für diesen Abstand zu vergleichen. Dieses Vorgehen ist zwar weniger aufwendig, jedoch kann unter Umständen eine Verschiebung der Frequenz nicht zweifelsfrei detektiert werden, oder beispielsweise zwischen einer Änderung der Güte des Schwingungssystems und einer Verschiebung der Resonanzfrequenz unterschieden werden.

Eine besonders bevorzugte Ausgestaltung des erfindungsgemäßen Verfahrens beinhaltet, dass die Spule in zumindest zwei Teilspulen unterteilt und mit zumindest drei Anschlussdrähten versehen wird, wobei eine erste Teilspule mittels eines ersten und mittels eines zweiten Anschlussdrahtes kontaktiert wird, und wobei eine zweite Teilspule mittels des zweiten und mittels eines dritten Anschlussdrahtes kontaktiert wird. Die Spule wird also allgemein gesprochen in n Teilspulen unterteilt und durch n+1 Anschlussdrähte elektrisch kontaktiert. Durch die Aufteilung der Spule in zumindest zwei Teilspulen kann vorteilhaft lokalisiert werden, ob eine Fehlfunktion im Bereich des Spulendrahtes oder im Bereich von zumindest einem der Anschlussdrähte vorliegt. Außerdem kann in vielen Fällen genau spezifiziert werden, welcher Art die Fehlfunktion ist, also ob es sich beispielswese um einen Windungsschluss oder um eine mangelhafte elektrische Kontaktierung handelt. Dies ist insbesondere nützlich mit Hinblick auf die funktionale Sicherheit des jeweiligen Messgeräts.

Im Falle einer Unterteilung der Spule in zumindest zwei Teilspulen ist es von Vorteil, wenn zumindest ein Teilwiderstand einer Teilspule ermittelt wird. Dieser Teilwiderstand kann dann beispielsweise mit einem Soll-Wert für den entsprechenden Teilwiderstand verglichen werden, analog zu den bereits beschriebenen Ausgestaltungen für den Fall des Gesamtwiderstands der Spule. Bevorzugt können auch mehrere Teilwiderstände ermittelt werden und mit entsprechenden Soll-Werten für diese Teilwiderstände verglichen werden. Dabei können Teilwiderstände für einzelne Teilspulen oder auch Teilwiderstände für Kombinationen aus zumindest zwei benachbarten Teilspulen betrachtet werden.

Es ist ebenso von Vorteil, wenn zumindest ein Verhältnis eines Teilwiderstands und des Gesamtwiderstands oder ein Verhältnis zwischen zumindest zwei Teilwiderständen gebildet wird/werden. Durch die Bildung von Verhältnissen können verschiedene Einflüsse von den Prozessbedingungen auf die Ermittlung der jeweiligen Teil-Widerstände bzw. des Gesamtwiderstands der Spule, wie beispielsweise der Einfluss der Temperatur des Mediums. eliminiert bzw. minimiert werden.

Die der Erfindung zugrundeliegende Aufgabe wird ferner gelöst durch eine Vorrichtung zur Bestimmung und/oder Überwachung zumindest einer Prozessgröße eines Mediums in einem Behälter, umfassend zumindest eine Spule mit zumindest zwei Anschlussdrähten, welche Vorrichtung dazu ausgestaltet ist, ein Verfahren nach zumindest einem der beschriebenen Ausgestaltungen auszuführen.

In einer bevorzugten Ausgestaltung handelt es sich bei der Vorrichtung um einen vibronischen Sensor umfassend
- eine mechanisch schwingfähige Einheit,
- eine Antriebs-/Empfangseinheit mit zumindest der Spule mit den zwei Anschlussdrähten,
   welche Antriebs-/Empfangseinheit dazu ausgestaltet ist, die mechanisch schwingfähige Einheit mittels eines elektrischen Anregesignals zu mechanischen Schwingungen anzuregen und die mechanischen Schwingungen von der schwingfähigen Einheit zu empfangen und in ein elektrisches Empfangssignal umzuwandeln, und
- eine Elektronikeinheit, welche dazu ausgestaltet ist, ausgehend vom Empfangssignal das Anregesignal zu erzeugen, und aus dem Empfangssignal die zumindest eine Prozessgröße zu ermitteln.

Die in Zusammenhang mit dem erfindungsgemäßen Verfahren beschriebenen Ausgestaltungen sind mutatis mutandis auch auf die erfindungsgemäße Vorrichtung anwendbar und umgekehrt.

Die Erfindung sowie ihre vorteilhaften Ausgestaltungen werden nachfolgend anhand der Figuren Fig. 1 - Fig. 6 näher beschrieben. Es zeigt:
Fig. 1: eine schematische Skizze eines vibronischen Sensors gemäß Stand der Technik,
Fig. 2: eine elektromagnetische Antriebs-/Empfangseinheit eines vibronischen Sensors gemäß Stand der Technik,
Fig. 3: ein Ersatzschaltbild für den ohmschen Gesamtwiderstand einer Spule,
Fig. 4 ein Ersatzschaltbild für den ohmschen Widerstand einer in drei Teilspulen unterteilten Spule,
Fig. 5 ein Ersatzschaltbild einer Spule mit Kern zur Illustration der erfindungsgemäßen Zustandsüberwachung anhand eines Wechselsignals, und
Fig. 6: zur Illustration der erfindungsgemäßen Zustandsüberwachung anhand eines Wechselsignals drei Diagramme des Betrags der Impedanz und der Phase als Funktion der Frequenz für unterschiedliche Zustände einer Spule.

Obgleich sich die vorliegende Erfindung generell auf Spulen in Messgeräten der Prozess- und/oder Automatisierungstechnik bezieht, beschränkt sich die nachfolgende Beschreibung beispielhaft auf vibronische Sensoren. Genauer bezieht sich die nachfolgende Beschreibung auf einen vibronischen Sensor mit einer elektromagnetischen Antriebs-/Empfangseinheit umfassend zumindest eine Spule und zumindest einen Magneten. Die jeweiligen Überlegungen zum erfindungsgemäßen Verfahren und der erfindungsgemäßen Vorrichtung lassen sich direkt auf andere Messgeräte übertragen.

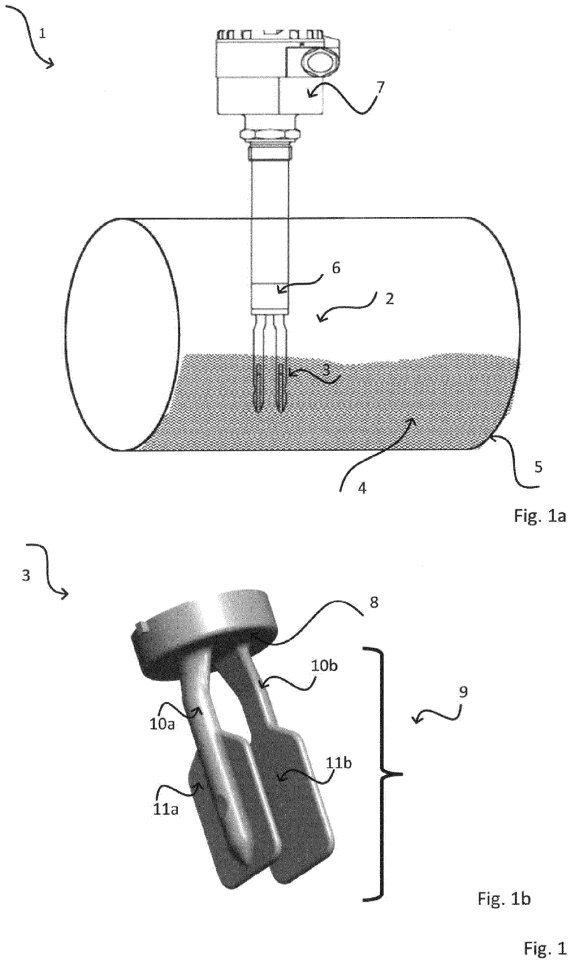

In Fig. 1a ist ein vibronisches Füllstandsmessgerät 1 gezeigt. Eine Sensoreinheit 2 mit einer mechanisch schwingfähigen Einheit 3 in Form einer Schwinggabel taucht teilweise in ein Medium 4 ein, welches sich in einem Behälter 5 befindet. Die schwingfähige Einheit 3 wird mittels der Antriebs-/Empfangseinheit 6, in der Regel einer elektromechanischen Wandlereinheit, zu mechanischen Schwingungen angeregt, und kann beispielsweise ein piezoelektrischer Stapel- oder Bimorphantrieb, aber auch eine elektromagnetische oder auch magnetostriktive Antriebs-/Empfangseinheit sein. Es versteht sich jedoch von selbst, dass auch andere Ausgestaltungen eines vibronischen Füllstandsmessgeräts 1 möglich sind, welche hier nicht dargestellt werden. Das Messgerät umfasst außerdem eine Elektronikeinheit 7, mittels welcher die Signalerfassung, - auswertung und/oder -speisung erfolgt.

Fig. 1b zeigt nochmal eine detailliertere Ansicht einer schwingfähigen Einheit 3 in Form einer Schwinggabel, wie sie beispielsweise für den LIQUIPHANT eingesetzt wird. Zu sehen ist eine Membran 8, und ein damit verbundene Schwingelement 9. Das Schwingelement 9 weist zwei Schwingstäbe 10a, 10b auf, an welchen endseitig jeweils ein Paddel 11a, 11b angeformt ist. Im Betrieb führt die Schwinggabel 3 Schwingungsbewegungen entsprechend der Schwingungsmode, mit welcher sie angeregt wird, aus. Jeder der beiden Schwingstäbe 10a, 10b verhält sich im Wesentlichen wie ein sogenannter Biegeschwinger. In der Grundschwingungsmode schwingen die beiden Schwingstäbe 10a, 10b beispielsweise gegenphasig zueinander.

Aus dem Stand der Technik sind unterschiedliche Ausgestaltungen für elektromagnetische Antriebs-/Empfangseinheiten bekannt geworden sind. Der Einfachheit halber bezieht sich die nachfolgende Beschreibung auf eine Antriebs-/Empfangseinheit 6, wie sie in der DE102015104533A1 oder auch in der bisher unveröffentlichten deutschen Patentanmeldung mit dem Aktenzeichen 102016112308.0 beschrieben ist. Auf beide Patentanmeldungen wird im Rahmen der vorliegenden Erfindung vollumfänglich Bezug genommen.

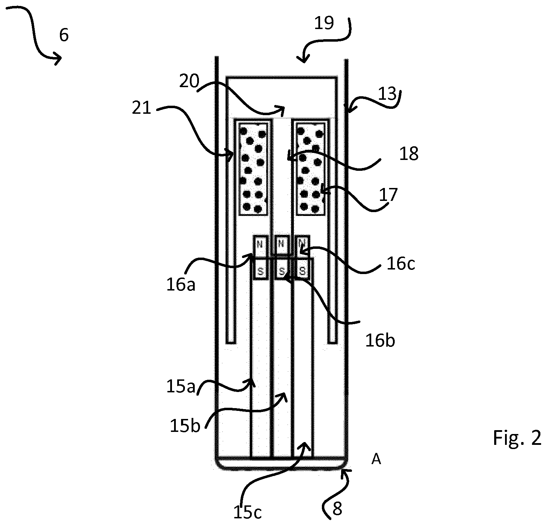

In Fig. 2 ist eine schematische Ansicht einer derartigen Antriebs-/Empfangseinheit 6 gezeigt. Ein Gehäuse 13 schließt im unteren Bereich der Wandung mit einer Membran 8 ab, welche der schwingfähigen Einheit 3 zuzuordnen ist. Für die hier gezeigte Ausgestaltung ist das Gehäuse 13 zylinderförmig und die scheibenförmige Membran hat eine kreisrunde Querschnittsfläche A. Es versteht sich jedoch von selbst, dass auch andere Geometrien denkbar sind und unter die vorliegende Erfindung fallen. Senkrecht zur Grundfläche A der Membran 8 und ins Innere des Gehäuses 13 hineinreichend sind drei Stangen 15a, 15b, 15c an der Membran 8,14 befestigt. Dabei handelt es sich insbesondere um eine kraftschlüssige Verbindung. Die Grundfläche A der Membran 8,14 liegt dann in einer Ebene senkrecht zur Längsrichtung der Stangen 15a, 15b, 15c. Beispielsweise sind die Stangen 15a, 15b, 15c gleichwinklig entlang einer gedachten Kreislinie um den Mittelpunkt M der Grundfläche A der Membran 8 angeordnet.

In dem der Membran 8 abgewandten Endbereich der Stangen 15a, 15b, 15c ist jeweils ein Magnet 16a, 16b, 16c, insbesondere ein SmCo- oder Alnico-Magnet, befestigt. Die Magnete 16a, 16b, 16c sind bevorzugt alle gleich ausgerichtet bzw. orientiert. Andere Ausgestaltungen beinhaltet 2 Stangen 15a und 15b sowie zwei Magnete 16a und 16b oder auch vier 15a-15d oder mehr Stangen und vier 16a-16d oder mehr Magnete. Bei einer geraden Anzahl von Magneten 16a-16d können die Magnete auch paarweise gleich ausgerichtet sein.

Oberhalb der Magnete 16a, 16b, 16c ist wiederum eine Spule 17 angeordnet, welche einen um den Kern 18 gewickelten Draht umfasst. Der Kern 18 der Spule 17 ist Teil einer topfförmigen Ankereinheit 19 mit einem Boden 20 sowie einer Umfangswandung 21. Beispielsweise kann der Boden 20 ebenso wie die Grundfläche A der Membran 8 eine kreisförmige Querschnittsfläche aufweisen. Vom Boden 20 der topfförmigen Ankereinheit 19 reicht der Kern 18 der Spule 17 in Form eines Stutzens zentrisch ins Innere der Ankereinheit 19. Die Umfangswandung 21 hat in diesem Falle dann die Funktion einer magnetischen Feldrückführung inne. Die Stangen 15a-15c mit den Magneten 16a-16c berühren die Spule 17 und den Kern 18 nicht. Die Spule 17 wird im fortlaufenden Betrieb zur Erzeugung eines magnetischen Wechselfeldes mit einem Wechselstromsignal beaufschlagt. Hierzu verfügt die Spule über zumindest zwei in Fig. 2a nicht gezeigte Anschlussdrähte.

Aufgrund dieses Wechselfeldes werden die Stangen 15a-15c über die Magnete 16a-16c horizontal, d. h. senkrecht oder quer zu ihrer Längsachse, ausgelenkt derart, dass sie in Schwingungen versetzt werden. Einerseits haben die Stangen 15a-15c dann eine Hebelwirkung, durch welche die durch die horizontale Auslenkung erzeugte Biegung der Stangen 15a-15c auf die Membran 8 übertragen wird derart, dass die Membran 8,14 in Schwingungen versetzt wird. Andererseits handelt es sich bei der Kombination aus den beiden Stangen 15a-15c und der Membran 8 aber um einen eigenen Resonator. Die Anregung der Membran 8 zu mechanischen Schwingungen erfolgt also mittels eines magnetischen Wechselfeldes.

Mittels der vorliegenden Erfindung kann eine Zustandsüberwachung der Spule 17 vorgenommen werden. Hierzu wird ein Soll-Wert R_{ges,ref} für einen ohmschen Gesamtwiderstand der Spule 17 ermittelt. Durch Beaufschlagung der Spule mit einem elektrischen Anregesignal und Auswertung eines von der Spule 17 empfangenen Empfangssignals kann dann zu vorgebbaren Zeitpunkten, beispielsweise periodisch in vorgebbaren Zeitintervallen oder individuell auf Anfrage, ein Ist-Wert R_{ges,,} für den ohmschen Gesamtwiderstand der Spule 17 ermittelt werden. Anhand eines Vergleichs des Ist-Werts R_{ges} mit dem Soll-Wert R_{ges,ref} kann dann ein Zustandsindikator für die Spule 17 ermittelt werden. Beispielsweise kann eine Abweichung zwischen dem Ist-Wert R_{ges} und dem Soll-Wert R_{ges,ref} bestimmt werden. Übersteigt die Abweichung einen vorgebbaren Grenzwert, so kann auf eine Fehlfunktion im Bereich der Spule 17 rückgeschlossen werden. Dabei kann es sich beispielsweise um einen Windungsschluss des Spulendrahts 22 oder um eine mangelnde elektrische Kontaktierung zwischen dem Spulendraht 22 und zumindest einem der Anschlussdrähte 23a,23b handeln.

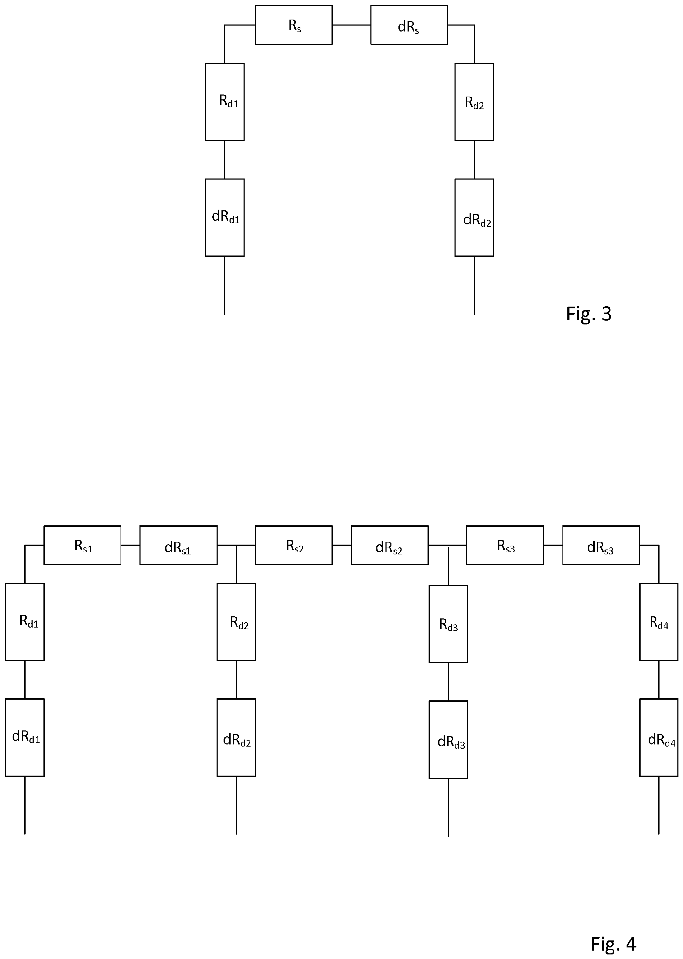

Ein Soll-Wert R_{ges} für den ohmschen Gesamtwiderstand der Spule 17 kann dabei einerseits, beispielsweise im Rahmen der Fertigung des jeweiligen Sensors 1 oder bei dessen Auslieferung, gemessen werden. Aber auch eine theoretische Bestimmung anhand eines elektrischen Ersatzschaltbildes, wie in Fig. 3 gezeigt, ist möglich. Für ein derartiges Ersatzschaltbild sind unterschiedlichste Ausgestaltungen denkbar, welche allesamt unter die vorliegende Erfindung fallen. Ohne Beschränkung der Allgemeinheit wird für das hier gezeigte Beispiel der Spulendraht S durch eine Reihenschaltung aus einem Spulenwiderstand R_{S} und einem Spulen-Fehlerwiderstand dR_{S} und die beiden Anschlussdrähte d₁, d₂ ebenfalls jeweils durch einen Draht-Widerstand Rd₁ bzw. Rd₂ und jeweils einen dazu in Reihe geschalteten Draht-Fehlerwiderstand dR₁ bzw. dR2 dargestellt. Anhand des Ersatzschaltbildes kann ein Soll-Wert R_{ges},_{ref} für den Gesamtwiderstand der Spule 17 ermittelt werden. Dazu können vorgebbare Fehler-Werte für die Fehlerwiderstände dRₛ, dRd₁, dRd₂ angenommen werden, welche Fehlerwiderstände im Prinzip maximal zulässigen Toleranzen für die Widerstände Rₛ, Rdi, Rd₂ angeben. In diesem Falle wird der vorgebbare Grenzwert für eine Abweichung zwischen Ist-Wert R_{ges} und Soll-Wert R_{ges,ref} anhand der Fehlerwiderstände dRₛ, dRd₁, dRd₂ definiert bzw. vorgegeben.

Eine weitere, bevorzugte Ausgestaltung ist in Fig. 4 gezeigt. Die Spule 17 ist in drei Teilspulen S₁, S₂ und S₃ unterteilt, und mittels vier Anschlussdrähten d₁-d₄ elektrisch kontaktiert. Die erste Teilspule S₁ ist mittels der Anschlussdrähte d₁ und d₂ kontaktiert, die zweite Teilspule S₂ mittels der Anschlussdrähte d₂ und d₃, und die dritte Teilspule S₃ mittels der Anschlussdrähte d₃ und d₄. Es sei darauf verwiesen, dass die Spule 17 erfindungsgemäß in eine beliebige Anzahl von zumindest zwei Teilspulen S₁ und S₂ unterteilbar ist, wobei jeweils für n Teilspulen S₁-Sₙ n+1 Anschlussdrähte vorgesehen sind. Die nachfolgenden Überlegungen lassen sich dabei auf eine Anzahl von Teilspulen ungleich drei direkt übertragen.

Durch die Unterteilung der Spule 17 in Teilspulen - im vorliegenden Fall in die drei Teilspulen S₁, S₂ und S₃, lässt sich ein Windungsschluss bzw. eine mangelnde elektrische Kontaktierung im Bereich der Spule vorteilhaft besser lokalisieren. Hierzu können neben dem Gesamtwiderstand R_{ges} Teilwiderstände für je zumindest eine Teilspule R_{S1}, R_{S2} und R_{S3} ermittelt werden, oder für jeweils zwei aufeinanderfolgende Teilspulen R_{S12} oder R_{S23}. Ähnlich wie im Falle des Gesamtwiderstand R_{ges} bzw. R_{ges,ref} der Spule 17 können jeweils im fortlaufenden Betrieb des Sensors 1 ermittelte Ist-Werte der Teilwiderstände R_{S1}, R_{S2}, R_{S3}, R_{S12} und/oder R_{S23} mit entsprechenden Soll-Werten R_{S1,ref}, R_{S2,ref}, R_{S3,ref}, R_{S12,ref} und/oder R_{S23,ref} verglichen werden. Beispielsweise können jeweils vorliegende Abweichungen ermittelt werden.

Analog zur Ausgestaltung in Fig. 3 werden gemäß Fig. 4 die jeweiligen Soll-Werte für die Teilwiderstände und den Gesamtwiderstand anhand eines Ersatzschaltbildes ermittelt, in welchem die Teilspulen jeweils durch eine Reihenschaltung eines Spulenwiderstand R_{S1}-R_{S3} und eines zugehörigen Spulen-Fehlerwiderstands dR_{S1}-dR_{S3} und die Anschlussdrähte analog jeweils durch Drahtwiderstände R_{d1}-R_{d4} und zugehörige Draht-Fehlerwiderstände dR_{d1}-dR_{d4} dargestellt werden. Da der ohmsche Widerstand des Spulendrahtes S und der der Anschlussdrähte d₁-d₄ von der Temperatur abhängig sind, können alternativ Verhältnisse verschiedener Teilwiderstände R_{S1}, R_{S2}, R_{S3}, R_{S12} und/oder R_{S23} und/oder zumindest eines Teilwiderstands R_{S1}, R_{S2}, R_{S3}, R_{S12} und/oder R_{S23} und des Gesamtwiderstands R_{ges} betrachtet werden. In diesem Falle kann der Einfluss der Prozessumgebung auf die Zustandsüberwachung eliminiert bzw. minimiert werden.

Die Spule 17 kann grundsätzlich in mehrere Teilspulen S₁-Sₙ mit zumindest teilweise unterschiedlicher Windungszahl als auch in Teilspulen mit zumindest paarweise jeweils gleicher Windungszahl unterteilt werden. Analog kann es sich bei den n+1 Anschlussdrähten d₁-dₙ₊₁ um im Wesentlichen identisch ausgestaltete Anschlussdrähte d₁-dₙ₊₁ oder um zumindest teilweise unterschiedlich ausgestaltete Anschlussdrähte d₁-dₙ₊₁ handeln. Beispielsweise können die Länge und/oder Querschnittsfläche der Drähte d₁-dₙ₊₁ variabel sein.

Im Falle, dass für die Ausgestaltung gemäß Fig. 4 die Spule 17 in drei Teilspulen S₁-S₃ unterteilt wird, und ebenfalls die Anschlussdrähte d₁-d₄ gleich ausgestaltet sind, reicht es aus Gründen der Redundanz für eine tiefgreifende Zustandsüberwachung anhand der jeweiligen Widerstände aus, wenn die Verhältnisse R_{S1}/R_{S2}, R_{S2}/R_{S3} sowie R_{S12}/R_{S23} gebildet und mit den entsprechenden Verhältnissen der jeweiligen Soll-Werte R_{S1,ref}/R_{S2,ref}, R_{S2,ref}/R_{S3,ref} sowie R_{S12,ref}/R_{S23,ref} verglichen werden. Hierzu kann beispielsweise eine sogenannte Pivot-Tabelle eingesetzt werden.

Im Falle eines Kabelbruches in einem Anschlussdraht d1-dn oder einem Draht einer der Teilspulen S1-Sn ist eine signifikante Abweichung zwischen den jeweiligen Ist-Werten und Soll-Werten der von dem Kabelbruch betroffenen Teilwiderstände zu erwarten. Im Falle einer mangelnden elektrischen Kontaktierung zwischen einem Anschlussdraht d1-dn und einem Draht einer der Teilspulen S1-Sn so steigt der Ist-Wert des zumindest einen betroffenen Teilwiderstands gegenüber den nicht betroffenen Teilwiderständen an.

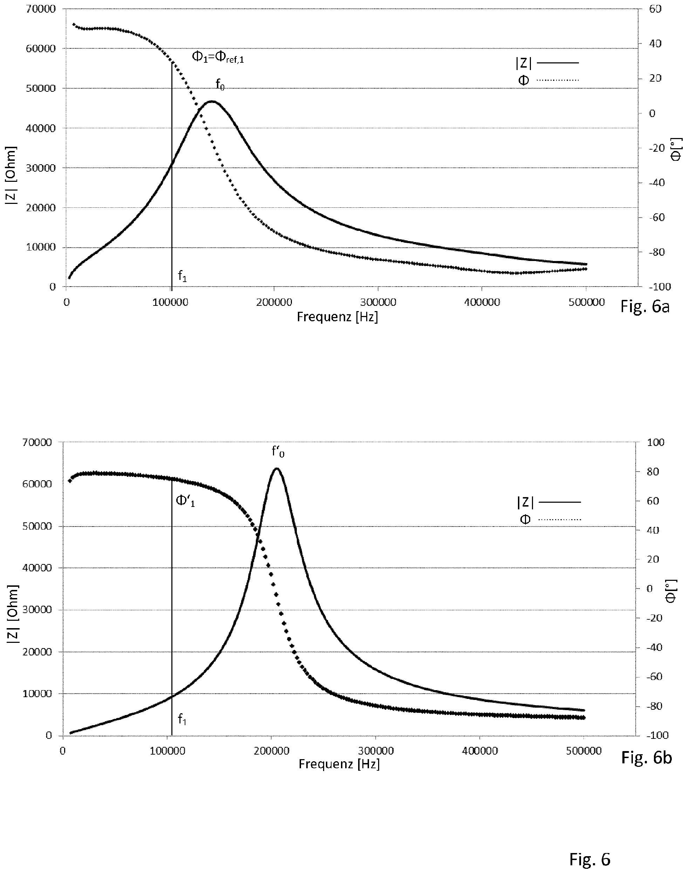

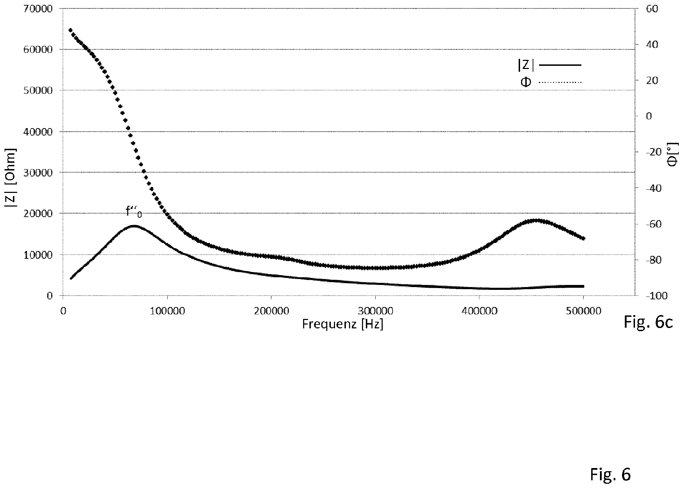

Weitere Ausgestaltungen der vorliegenden Erfindung sind schließlich durch die Figuren Fig. 5 und Fig. 6 illustriert. Indem die Spule 17 mit einem Anregesignal in Form eines Wechselsignals beaufschlagt wird, lassen sich zusätzliche Aussagen über den Zustand der Spule 17 machen. Hierzu ist in Fig. 5 ein elektrisches Ersatzschaltbild einer Spule 17 mit Kern 18 gezeigt. Dabei beschreibt L die Induktivität der Spule 17, R₁ den Wirkwiderstand der Spule 17, R₂ den äquivalenten ohmschen Serienwiderstand, R_{fe} den frequenzabhängigen Kernwiderstand und C die Streukapazitäten zwischen den Windungen der Spule 17.

Erfindungsgemäß wird zumindest ein Wert für die Phasenverschiebung Φ₁ für eine vorgebbare Frequenz f₁ mit einem Soll-Wert für diese Phasenverschiebung Φ_{ref,1} verglichen und eine Abweichung zwischen dem Ist-Wert Φ_{f} und dem Soll-Wert Φ_{ref,1} ermittelt. Im Falle eines Defekts im Bereich der Spule 17, wie beispielsweise einem Windungsschluss oder eingedrungenem Medium, kommt es zu einer Verschiebung des Verlaufs der Phase Φ als Funktion der Frequenz f und somit ändert sich der der Frequenz f₁ zugehörige Wert für Φ₁. Da es im Falle eines Defekts im Bereich der Spule 17, sondern beispielsweise auch zu einer Änderung der Güte Q des Schwingungssystems kommen kann, bietet es sich an, für zumindest zwei vorgebbare Frequenzen f₁ und f₂ die Phasen Φ₁ und Φ₂ auszuwerten und mit vorgebbaren Soll-Werten Φ_{ref,1} und Φ_{ref,2} zu vergleichen.

Wenn die Frequenz f des Anregesignals variabel ist, können insbesondere auch Spektrum der Impedanz Z, des Betrags der Impedanz |Z|, der Amplitude A und/oder Phase Φ zwischen dem Anregesignal und Empfangssignal als Funktion der Frequenz f generiert und ausgewertet werden. Entsprechende Spektren sind zur besseren Veranschaulichung des Verhaltens des Schwingungssystems Gegenstand der Fig. 6 sowie der nachfolgenden Beschreibung.

In Fig. 6a sind jeweils Spektren des Betrags der Impedanz |Z| und der Phase Φ für eine voll funktionsfähige Spule 17 gezeigt. Bei der Resonanzfrequenz f₀ durchläuft der Betrag der Impedanz |Z| einen Maximalwert, während das Spektrum der Phase Φ einen Wendepunkt aufweist. Die zur Frequenz f₁ zugehörige Phase Φ₁ kann als Soll-Wert Φ_{ref,1} für die Phase herangezogen werden.

Im Falle, dass etwa ein Drittel der Spule 17 kurzgeschlossen ist, ergeben sich geänderte Spektren, wie in Fig. 6b gezeigt. Durch den Kurzschluss kommt es zu einer Verringerung der Induktivität L der Spule 17 und damit einhergehend zu einer positiven Verschiebung der Resonanzfrequenz Δf₁ im Vergleich zu einer voll funktionsfähigen Spule 17. Die Resonanzfrequenz f'₀ ist gegenüber der Resonanzfrequenz f₀ der voll funktionsfähigen Spule zu einem höheren Wert verschoben, und entsprechend kommt es ebenso zu einer analogen Verschiebung des Verlaufs des Spektrums der Phase Φ. Zusätzlich ändert sich aufgrund des Kurzschlusses im Bereich der Spule 17 die Güte Q des Schwingungssystems.

Wie man anhand der Verläufe der Spektren sieht, ändert sich die zur Frequenz f₁ zugehörige Phase auf den Wert Φ'₁ und entspricht damit nicht mehr dem vorgebbaren Soll-Wert Φ_{ref,1}. Überschreitet die Abweichung einen ersten vorgebbaren Grenzwert, so kann auf das Vorliegen eines Windungsschlusses geschlossen werden. Analoge Überlegungen gelten für den Fall, wenn die Phasen Φ₁ und Φ₂ für zwei vorgebbaren Frequenzen f₁ und f2 ausgewertet werden.

Im Falle eines Kabelbruches kommt es zu einem vollständigen Unterbruch des jeweiligen Schwingkreises.

Im Falle, dass hingegen ein flüssiges Medium oder auch Feuchtigkeit mit der Spule 17 in Kontakt kommt, ergibt sich dagegen ein Spektrum wie in Fig. 6c gezeigt. Es kommt zu einer Änderung der Streukapazität C zwischen den Windungen der Spule 17, und damit einhergehend zu einer negativen Verschiebung der Resonanzfrequenz Δf₂ im Vergleich zu einer voll funktionsfähigen Spule.

Wie im Falle eines Kurzschlusses, kommt es auch bei Kontakt der Spule mit einem Medium zu geänderten Verläufen der Spektren. Im Gegensatz zu Fig. 6b verschiebt sich die Resonanzfrequenz f"₀ allerdings zu einem geringeren Wert. Die Frequenzverschiebung Δf₂ ist also negativ. Die Resonanzfrequenz f"₀ ist gegenüber der Resonanzfrequenz f₀ der voll funktionsfähigen Spule zu einem geringeren Wert verschoben, und entsprechend kommt es ebenso zu einer analogen Verschiebung des Verlaufs des Spektrums der Phase Φ. Zusätzlich ändert sich aufgrund des Kurzschlusses im Bereich der Spule 17 die Güte Q des Schwingungssystems.

Wie man anhand der Verläufe der Spektren sieht, ändert sich die zur Frequenz f₁ zugehörige Phase auf den Wert Φ"₁ und entspricht damit nicht mehr dem vorgebbaren Soll-Wert Φ_{ref,1}. Überschreitet die Abweichung einen ersten vorgebbaren Grenzwert, so kann auf das Vorliegen eines Windungsschlusses geschlossen werden. Analoge Überlegungen gelten auch hier für den Fall, wenn die Phasen Φ₁ und Φ₂ für zwei vorgebbaren Frequenzen f₁ und f₂ ausgewertet werden.

Indem die Phase Φ ergänzend zu den in Zusammenhang mit den Figuren Fig. 3 und Fig. 4 erläuterten Betrachtungen zu den ohmschen Widerständen R analysiert wird, lassen sich nicht nur generelle Aussagen bezüglich der Funktionsfähigkeit der Spule 17 generieren. Vielmehr kann in vielen Fällen zwischen Windungsschlüssen, Kabelbrüchen und mangelhaften elektrischen Kontaktierungen, welche zu Übergangswiderständen führen, unterschieden werden.

Zusammenfassend ermöglicht die vorliegende Erfindung eine Zustandsüberwachung einer Spule 17 in einem Messgerät 1. Vorteilhaft lässt sich mit der vorliegenden Erfindung ein Messgerät 1 mit einem hohen Maß an funktionaler Sicherheit gewährleisten, da verschiedene Fehlfunktionen detektiert und voneinander unterschieden werden können. Das erfindungsgemäße Verfahren kann periodisch in vorgebbaren Zeitintervallen oder auf Bedarf ausgeführt werden. Auch eine simultan zum fortlaufenden Messbetrieb ablaufende Zustandsüberwachung ist unter Umständen denkbar, sofern eine gegenseitige Beeinflussung des Mess- und Diagnosebetriebs ausgeschlossen werden kann.

### Bezugszeichenliste

- 1: Vibronischer Sensor
- 2: Sensoreinheit
- 3: Schwingfähige Einheit
- 4: Medium
- 5: Behältnis
- 6: Antriebs-/Empfangseinheit
- 7: Elektronikeinheit
- 8: Membran der schwingfähigen Einheit
- 9: Schwingelement
- 10a, 10b: Schwingsäbe
- 11a, 11b: Paddel
- 13: Gehäuse der elektromechanischen Wandlereinheit
- 15a-15d: Stangen
- 16a-16d: Magnete
- 17: Spule
- 18: Kern der Spule
- 19: topfförmige Ankereinheit
- 20: Boden
- 21: Umfangsbewandung

- T: Temperatur des Mediums
- S₁-Sₙ: Teilspulen
- d₁-dₙ: Anschlussdrähte
- R_{ref},: Soll-Wert für einen ohmschen Widerstand
- R_{ges}: Ohmscher Gesamtwiderstand
- Rs, R_{S1}-R_{Sn}: Ohmsche Widerstände der Spule oder der Teilspulen
- R_{d}, R_{d1}-R_{dn}: Ohmsche Widerstände der Anschlussdrähte
- dRs, dR_{S1}-dR_{Sn}: Ohmsche Spulen- oder Teilspulen-Fehlerwiderstände
- dR_{d1}-dR_{dn}: Ohmsche Draht-Fehlerwiderstände
- Φ: Phase
- f: Frequenz

## Patentansprüche

1. Verfahren zur Zustandsüberwachung einer Spule (17) mit zumindest zwei Anschlussdrähten (d1, d2), welche Spule (17) Teil einer Vorrichtung (1) zur Bestimmung zumindest einer Prozessgröße eines Mediums (4) in einem Behälter (5) ist,
umfassend folgende Verfahrensschritte
- Ermitteln eines Soll-Wertes (R_{ges,ref}) eines ohmschen Gesamtwiderstands für die Spule (17) und die Anschlussdrähte (d₁,d₂),
- Beaufschlagen der Spule (17) mit einem elektrischen Anregesignal und Empfangen eines elektrischen Empfangssignals von der Spule (17) mittels der beiden Anschlussdrähte (d₁,d₂),
- Ermitteln eines Ist-Wertes (R_{ges}) des ohmschen Gesamtwiderstands zumindest anhand des Empfangssignals, und
- Vergleichen des Ist-Wertes (R_{ges}) mit dem Soll-Wert (R_{ges,ref}) und Ermitteln eines Zustandsindikators anhand des Vergleichs,
- wobei es sich bei dem Anregesignal um ein Wechselsignal handelt, wobei für zumindest ein erstes Anregesignal mit einer ersten vorgebbaren Frequenz (f₁) eine erste Phase (Φ₁) zwischen dem Anregesignal und dem Empfangssignal ermittelt wird, und wobei eine Abweichung zwischen der ersten Phase (Φ₁) und einem Soll-Wert (Φ_{ref,1}) für die erste Phase ermittelt wird, und
- wobei im Falle, dass die Abweichung der ersten Phase einen ersten vorgebbaren Grenzwert überschreitet, auf das Vorliegen zumindest eines Windungsschlusses im Bereich der Spule (17) geschlossen wird.

2. Verfahren nach Anspruch 1,
wobei eine Abweichung zwischen dem Ist-Wert (R_{ges}) und dem Soll-Wert (R_{ges,ref}) des ohmschen Gesamtwiderstands bestimmt wird, und wobei der Zustandsindikator anhand der Abweichung des ohmschen Gesamtwiderstands ermittelt wird.

3. Verfahren nach Anspruch 1 oder 2,
wobei eine elektrische Ersatzschaltung für den ohmschen Gesamtwiderstand (R_{ges}) der Spule erstellt wird, und wobei der Soll-Wert (R_{ges,ref}) für den ohmschen Gesamtwiderstand anhand der Ersatzschaltung ermittelt wird.

4. Verfahren nach Anspruch 3,
wobei jeder der zumindest zwei Anschlussdrähte (d₁,d₂) durch eine Reihenschaltung eines Draht-Widerstands (R_{d1}, R_{d2}) und eines Draht-Fehler-Widerstands (dR_{d1}, dR_{d2}) ersetzt wird und/oder
wobei die Spule (17) durch eine Reihenschaltung eines Spulen-Widerstands (Rs) und eines Spulen-Fehlerwiderstands (dRs) ersetzt wird.

5. Verfahren nach Anspruch 4,
wobei für zumindest einen Draht-Fehlerwiderstand (dR_{d1}, dR_{d2}) und/oder den Spulen-Fehlerwiderstand (dRs) ein vorgebbarer Fehler-Wert angenommen wird.

6. Verfahren nach zumindest einem der vorherigen Ansprüche,
wobei es sich bei dem Zustandsindikator um eine Aussage über das Vorliegen zumindest eines Windungsschlusses im Bereich der Spule (17) oder um eine Aussage über eine mangelhafte elektrische Kontaktierung oder um einen Kabelbruch im Bereich der Spule (17) oder der zumindest zwei Anschlussdrähte (d₁,d₂) handelt.

7. Verfahren nach Anspruch 1,
wobei im Falle, dass die Abweichung der ersten Phase einen zweiten vorgebbaren Grenzwert überschreitet, auf das Vorhandensein von Feuchtigkeit oder Medium (5) zumindest in einem Bereich, in welchem sich die Spule (17) befindet, geschlossen wird.

8. -Verfahren nach zumindest einem der Ansprüche 1 oder 7,
wobei für zumindest ein zweites Anregesignal mit einer zweiten vorgebbaren Frequenz (f₂) eine zweite Phase (Φ₂) zwischen dem Anregesignal und dem Empfangssignal ermittelt wird, und wobei eine Abweichung zwischen der zweiten Phase (Φ₂) und einem Soll-Wert (Φ_{ref,2}) für die zweite Phase ermittelt wird.

9. Verfahren nach zumindest einem der vorherigen Ansprüche,
wobei die Spule (17) in zumindest zwei Teilspulen (S₁-S₃) unterteilt und mit zumindest drei Anschlussdrähten (d₁-d₄) versehen wird,
wobei eine erste Teilspule (S₁) mittels eines ersten (d₁) und mittels eines zweiten (d₂) Anschlussdrahtes kontaktiert wird, und
wobei eine zweite Teilspule (S₂) mittels des zweiten (d₂) und mittels eines dritten (d₃) Anschlussdrahtes kontaktiert wird.

10. -Verfahren nach Anspruch 9,
wobei zumindest ein Teilwiderstand (R_{S1}, R_{S2}, R_{S3}, R_{S12}, R_{S23}) einer Teilspule (S₁-S₃) ermittelt wird.

11. -Verfahren nach Anspruch 9 oder 10,
wobei zumindest ein Verhältnis eines Teilwiderstands (R_{S1}, R_{S2}, R_{S3}, R_{S12}, R_{S23}) und des Gesamtwiderstands (R_{ges}) oder ein Verhältnis zwischen zumindest zwei Teilwiderständen (Rs₁, R_{S2}, R_{S3}, R_{S12}, R_{S23}) gebildet wird/werden.

12. -Vorrichtung (1) zur Bestimmung und/oder Überwachung zumindest einer Prozessgröße eines Mediums (4) in einem Behälter (5), umfassend zumindest eine Spule (17) mit zumindest zwei Anschlussdrähten (d₁,d₂), welche Vorrichtung dazu ausgestaltet ist, ein Verfahren nach zumindest einem der vorherigen Ansprüche durchzuführen.

13. -Vorrichtung nach Anspruch 12,
wobei es sich bei der Vorrichtung (1) um einen vibronischen Sensor umfassend
- eine mechanisch schwingfähige Einheit (3),
- eine Antriebs-/Empfangseinheit (6) mit zumindest der einen Spule (17) mit den zumindest zwei Anschlussdrähten (d₁,d₂), welche Antriebs-/Empfangseinheit (6) dazu ausgestaltet ist, die mechanisch schwingfähige Einheit (3) mittels eines elektrischen Anregesignals zu mechanischen Schwingungen anzuregen und die mechanischen Schwingungen von der schwingfähigen Einheit (3) zu empfangen und in ein elektrisches Empfangssignal umzuwandeln, und
- eine Elektronikeinheit (7), welche dazu ausgestaltet ist, ausgehend vom Empfangssignal das Anregesignal zu erzeugen, und aus dem Empfangssignal die zumindest eine Prozessgröße zu ermitteln, handelt.

## Claims

1. Procedure for monitoring the condition of a coil (17) with at least two connecting wires (d₁, d₂), wherein said coil (17) is part of a unit (1) designed to determine at least one process variable of a medium (4) in a vessel (5),
wherein said procedure comprises the following steps:
- Determination of a target value (R_{ges,ref}) of an Ohmic total resistance for the coil (17) and the connecting wires (d₁,d₂),
- Application of an electrical excitation signal on the coil (17) and receipt of an electrical reception signal from the coil (17) by means of the two connecting wires (d₁, d₂),
- Determination of an actual value (R_{ges}) of the Ohmic total resistance at least using the reception signal, and
- Comparison of the actual value (R_{ges}) with the target value (R_{ges,ref}) and determination of a condition indicator using the comparison,
- wherein the excitation signal is an alternating signal, wherein a first phase (Φ₁) between the excitation signal and the reception signal is determined for at least a first excitation signal with a first predeterminable frequency (f₁), and wherein a deviation is determined between the first phase (Φ₁) and a target value (Φ_{ref,1}) for the first phase, and
- in the event that the deviation of the first phase exceeds a first predeterminable limit value, one concludes the presence of at least a shorted coil in the area of the coil (17).

2. Procedure as claimed in Claim 1,
wherein a deviation is determined between the actual value (R_{ges}) and the target value (R_{ges,ref}) of the Ohmic total resistance, and wherein the condition indicator is determined using the deviation of the Ohmic total resistance.

3. Procedure as claimed in Claim 1 or 2,
wherein an electrical replacement circuit is created for the Ohmic total resistance (R_{ges}) of the coil, and wherein the target value (R_{ges,ref}) for the Ohmic total resistance is determined using the replacement circuit.

4. Procedure as claimed in Claim 3,
wherein each of the at least two connecting wires (d₁, d₂) is replaced by a series connection of a wire resistance (R_{d1}, R_{d2}) and of a wire fault resistance (dR_{d1}, dRd2) and/or
wherein the coil (17) is replaced by a series connection of a coil resistance (Rₛ) and a coil fault resistance (dRₛ).

5. Procedure as claimed in Claim 4,
wherein a predeterminable fault value is assumed for at least a wire fault resistance (dR_{d1}, dR_{d2}) and/or the coil fault resistance (dRₛ).

6. Procedure as claimed in at least one of the previous claims,
wherein the condition indicator is an indication of the presence of at least a shorted coil in the area of the coil (17) or an indication of a faulty electrical contact or a cable break in the area of the coil (17) or of the at least two connecting wires (d₁, d₂).

7. Procedure as claimed in Claim 1,
wherein in the event that the deviation of the first phase exceeds a second predeterminable limit value, one concludes the presence of moisture or medium (5) at least in an area in which the coil (17) is located.

8. Procedure as claimed in at least one of the Claims 1 or 7,
wherein, for at least a second excitation signal with a second predeterminable frequency (f₂), a second phase (Φ₂) is determined between the excitation signal and the reception signal, and wherein a deviation between the second phase (Φ₂) and a target value (Φ_{ref,2}) is determined for the second phase.

9. Procedure as claimed in at least one of the previous claims,
wherein the coil (17) is divided into at least two partial coils (S₁-S₃) and is provided with at least three connecting wires (d₁-d₄), wherein a first partial coil (S₁) is contacted by means of a first (d₁) and a second (d₂) connecting wire, and wherein a second partial coil (S₂) is contacted by means of a second (d₂) and a third (d₃) connecting wire.

10. Procedure as claimed in Claim 9,
wherein at least a partial resistance (Rₛ₁, Rₛ₂, Rₛ₃, Rₛ₁₂, Rₛ₂₃) of a partial coil (S₁-S₃) is determined.

11. Procedure as claimed in Claim 9 or 10,
wherein at least a ratio of a partial resistance (Rₛ₁, Rₛ₂, Rₛ₃, Rₛ₁₂, Rₛ₂₃) to the total resistance (R_{ges}) or a ratio between at least two partial resistances (Rₛ₁, Rₛ₂, Rₛ₃, Rₛ₁₂, Rₛ₂₃) is/are formed.

12. Unit (1) designed to determine and/or monitor at least one process variable of a medium (4) in a vessel (5), comprising at least a coil (17) with at least two connecting wires (d₁, d₂), wherein said unit is designed to perform a procedure according to at least one of the previous claims.

13. Unit as claimed in Claim 12,
wherein the unit (1) is a vibronic sensor comprising
- a unit (3) that is capable of vibrating mechanically,
- a drive/reception unit (6) with at least a coil (17) with the at least two connecting wires (d₁, d₂), wherein said drive/reception unit (6) is designed to excite the unit that is capable of vibrating mechanically (3) to produce mechanical vibrations by means of an electrical excitation signal and to receive the mechanical vibrations from the unit that is capable of vibrating mechanically (3) and to convert these signals into an electrical reception signal, and
- an electronic unit (7), which is designed to generate the excitation signal from the reception signal and to determine the at least one process variable from the reception signal.

## Revendications

1. Procédé destiné à la surveillance de l'état d'une bobine (17) avec au moins deux fils de raccordement (d₁, d₂), laquelle bobine (17) fait partie d'un dispositif (1) destiné à la détermination d'au moins une grandeur de process d'un produit (4) dans un réservoir (5),
lequel procédé comprend les étapes suivantes
- Détermination d'une valeur de consigne (R_{ges,ref}) d'une résistance ohmique totale pour la bobine (17) et les fils de raccordement (d₁,d₂),
- Application d'un signal d'excitation électrique à la bobine (17) et réception d'un signal de réception électrique de la bobine (17) au moyen des deux fils de raccordement (d₁, d₂),
- Détermination d'une valeur réelle (R_{ges}) de la résistance ohmique totale au moins à l'aide du signal de réception, et
- Comparaison de la valeur réelle (R_{ges}) avec la valeur de consigne (R_{ges,ref}) et détermination d'un indicateur d'état à l'aide de la comparaison,
- le signal d'excitation étant un signal alternatif, une première phase (Φ₁) entre le signal d'excitation et le signal de réception étant déterminée pour au moins un premier signal d'excitation présentant une première fréquence (f₁) prédéfinissable, et un écart entre la première phase (Φ₁) et une valeur de consigne (Φ_{ref,1}) pour la première phase étant déterminée, et
- dans le cas où l'écart de la première phase dépasse une première valeur limite prédéfinissable, on conclut à la présence d'au moins un court-circuit entre spires dans la zone de la bobine (17).

2. Procédé selon la revendication 1,
pour lequel on détermine un écart entre la valeur réelle (R_{ges}) et la valeur de consigne (R_{ges,ref}) de la résistance ohmique totale, et pour lequel l'indicateur d'état est déterminé à l'aide de l'écart de la résistance ohmique totale.

3. Procédé selon la revendication 1 ou 2,
pour lequel un circuit électrique équivalent est créé pour la résistance ohmique totale (R_{ges}) de la bobine, et pour lequel la valeur de consigne (R_{ges,ref}) pour la résistance ohmique totale est déterminée à l'aide du circuit équivalent.

4. Procédé selon la revendication 3,
pour lequel chacun des au moins deux fils de raccordement (d₁, d₂) est remplacé par un montage en série d'une résistance de fil (R_{d1}, R_{d2}) et d'une résistance de défaut de fil (dR_{d1},dR_{d2}) et/ou
pour lequel la bobine (17) est remplacée par un montage en série d'une résistance de bobine (Rₛ) et d'une résistance de défaut de bobine (dRₛ).

5. Procédé selon la revendication 4,
pour lequel on suppose une valeur de défaut pouvant être prédéfinie pour au moins une résistance de défaut de fil (dR_{d1}, dR_{d2}) et/ou la résistance de défaut de bobine (dRₛ).

6. Procédé selon au moins l'une des revendications précédentes,
pour lequel l'indicateur d'état est une indication de la présence d'au moins un court-circuit entre spires dans la zone de la bobine (17) ou une indication d'un contact électrique défectueux ou d'une rupture de câble dans la zone de la bobine (17) ou des au moins deux fils de raccordement (d₁, d₂).

7. Procédé selon la revendication 1,
pour lequel, dans le cas où l'écart de la première phase dépasse une deuxième valeur limite pouvant être prédéfinie, on conclut à la présence d'humidité ou de produit (5) au moins dans une zone dans laquelle se trouve la bobine (17).

8. Procédé selon au moins l'une des revendications 1 ou 7,
pour lequel, pour au moins un deuxième signal d'excitation présentant une deuxième fréquence (f2) pouvant être prédéfinie, une deuxième phase (Φ₂) est déterminée entre le signal d'excitation et le signal de réception, et un écart entre la deuxième phase (Φ₂) et une valeur de consigne (Φ_{ref,2}) pour la deuxième phase est déterminé.

9. Procédé selon au moins l'une des revendications précédentes,
pour lequel la bobine (17) est divisée en au moins deux bobines partielles (S₁-S₃) et est pourvue d'au moins trois fils de raccordement (d₁-d₄), une première bobine partielle (S₁) étant mise en contact au moyen d'un premier (d₁) et d'un deuxième (d₂) fil de raccordement, et une deuxième bobine partielle (S₂) étant mise en contact au moyen du deuxième (d₂) et d'un troisième (d₃) fil de raccordement.

10. Procédé selon la revendication 9,
pour lequel on détermine au moins une résistance partielle (Rₛ₁, Rₛ₂, Rₛ₃, Rₛ₁₂, Rₛ₂₃) d'une bobine partielle (S₁-S₃).

11. Procédé selon la revendication 9 ou 10,
pour lequel au moins un rapport d'une résistance partielle (Rs₁, Rₛ₂, Rₛ₃, Rₛ₁₂, Rₛ₂₃) et de la résistance totale (R_{ges}) ou un rapport entre au moins deux résistances partielles (Rs₁, Rₛ₂, Rₛ₃, Rₛ₁₂, Rₛ₂₃) est/sont formé(s).

12. Dispositif (1) destiné à la détermination et/ou à la surveillance d'au moins une grandeur de process d'un produit (4) dans un réservoir (5), comprenant au moins une bobine (17) avec au moins deux fils de raccordement (d₁, d₂), lequel dispositif est conçu pour mettre en œuvre un procédé selon au moins l'une des revendications précédentes.

13. Dispositif selon la revendication 12,
pour lequel le dispositif (1) est un capteur vibronique comprenant
- une unité (3) apte à vibrer mécaniquement,
- une unité d'entraînement / de réception (6) avec au moins une bobine (17) avec les au moins deux fils de raccordement (d₁, d₂), laquelle unité d'entraînement / de réception (6) est conçue pour exciter l'unité apte à vibrer (3) en vibrations mécaniques au moyen d'un signal d'excitation électrique et pour recevoir les vibrations mécaniques de l'unité apte à vibrer (3) et les convertir en un signal de réception électrique, et
- une unité électronique (7), laquelle est conçue pour générer le signal d'excitation à partir du signal de réception et pour déterminer l'au moins une grandeur de process à partir du signal de réception.
